# EUROPÄISCHE PATENTANMELDUNG

(11) **EP 4 159 538 A1**
(43) Veröffentlichungstag der Anmeldung: **05.04.2023**
(21) Anmeldenummer: 22198558.3
(22) Anmeldetag: 28.09.2022
(51) Int. Cl.: B60P 1/52, B65G 67/04

(54) **SYSTEM UND VERFAHREN ZUM WARENTRANSPORT IN STÄDTEN**

(30) Priorität: 28.09.2021 DE 102021125176
(71) Anmelder: Reithmeier Mobility Solutions GmbH, 88212 Ravensburg (DE)
(72) Erfinder: Reithmeier, Jörg, 88214 Ravensburg (DE)
(74) Vertreter: Waller, Stefan

(57) **Zusammenfassung**

Bei einem System zum Warentransport, insbesondere in städtischen Bereichen, mit Containern (3) zur Aufnahme der Waren, insbesondere Pakete, sowie mindestens einer Unterverteilungsstelle (8), an der mindestens ein Container (3), bevorzugt eine Mehrzahl von Containern (3), zwischengelagert werden kann sowie mit mindestens einem Auslieferungsfahrzeug (9) das einen Container transportieren kann, wobei die Unterverteilungsstelle (8) eine ebene Tischfläche (16) aufweist, auf der die Container (3) gelagert und verschoben werden können, weist die Tischfläche (16) Wälzlagerungen (17) auf, auf denen die Container (3) aufliegen, insbesondere Lagerungskugeln oder Rollen, und die Auslieferungsfahrzeuge (9) eine niveaugleiche Ladefläche zur Aufnahme eines Containers (3) mit ebenfalls einer Wälzlagerung.

## Beschreibung

Die Erfindung betrifft ein System und Verfahren zum Warentransport in Städten, insbesondere zur Auslieferung von Paketsendungen.

Im Bereich der Logistik ist die Auslieferung von Waren und insbesondere Paketen in Großstädten durch die üblichen Transportfahrzeuge, im Regelfall Kleinlaster, oftmals nicht sehr effizient. Diese Fahrzeuge haben stets das Problem, auch nur kurzfristig Halten oder Parken zu können, um durch den Fahrer Pakete an Adressen auszuliefern. Im Regelfall werden sie dabei eher nicht mit der Straßenverkehrsordnung konform abgestellt.

Weiterhin ist zunehmend von Bedeutung, dass die üblichen Kleinlaster noch mit Verbrennungsmotoren angetrieben werden und eine emissionsfreie bzw. schadstofffreie Auslieferung an die Lieferadressen somit nicht möglich ist.

Es bestehen deshalb zur Lösung dieses Problems Überlegungen, ein integriertes und modulares Containersystem einzusetzen, bei dem von einer Unterverteilungsstelle, auch als Micro-Hub bezeichnet, die Waren und Pakete durch kleinere Auslieferungsfahrzeuge beispielsweise Lastfahrräder, Lastpedelecs oder Lastelektrofahrräder aber auch Elektroklein(st)transporter ausgeliefert werden. Diese Auslieferungsfahrzeuge für die Lieferung der Waren und Pakete auf der letzten Strecke zur Lieferadresse bzw. der "letzten Meile" weisen eine eher geringe Reichweite auf soweit sie elektrisch angetrieben werden und auch mit menschlicher Muskelkraft können keine weiten Strecken zurückgelegt werden. Daher holen diese Auslieferungsfahrzeuge die Waren und Pakete an den möglichst zentral in einem Auslieferungsraum, beispielsweise einem Stadtviertel in einer Innenstadt, positionierten Micro-Hubs ab, insbesondere vorkommissioniert in einem Container, der durch das Auslieferungsfahrzeug transportiert werden kann, und liefern den leeren Container zum Micro-Hub zurück, um neue Waren oder Pakete aufzunehmen.

Die Waren und Pakete, insbesondere mehrere Container mit Waren werden von einem Anlieferungsfahrzeug, beispielsweise einem Kleinlastwagen, mit den Containern bzw. Waren beliefert und die Leercontainer von diesen abtransportiert.

Bekannt ist beispielsweise, als Micro-Hub eine Wechselbrücke, bzw. auf Stützen absetzbare Transportvorrichtung, einzusetzen, die mit einem entsprechenden Lastwagen an eine Position gefahren wird und dort als Micro-Hub zum Einsatz kommt. Nachteilig an diesem Stand der Technik ist, dass eine solche Vorrichtung relativ viel Platz benötigt und daher nur auf offenen Parkflächen eingesetzt werden kann. Weiterhin benötigt die Wechselbrücke im Regelfall zum Absenken, Anheben bzw., soweit sie selbst als geschlossener Koffer ausgeführt ist, zum Öffnen sowie Schließen Elektrizität und ist daher wenig flexibel in Bezug auf den Standort.

Weiterhin ist nachteilig, dass als Container, die von dem Anlieferungsfahrzeug mit der Wechselbrücke antransportiert werden solche mit Rollen am Boden zum Einsatz kommen. Dies führt dazu, dass die Auslieferungsfahrzeuge ganz speziell auf diesen Wechselcontainer eingerichtet sein müssen, etwa indem Schienen mit der richtigen "Spurweite" vorgesehen sind. Die Rollen am Container selbst führen weiterhin zu zusätzlichem Gewicht und sind verschleißanfällig, insbesondere wenn vorgesehen ist, dass die Container über den normalen Boden gerollt und von den Auslieferungsfahrzeugen durch Anheben aufgenommen werden.

Der vorliegenden Erfindung liegt die Aufgabe zugrunde, ein System und Verfahren zum Warentransport in Städten zur Verfügung zu stellen, mit dem die zuvor genannten Nachteile vermieden werden und mit dem eine effiziente sowie emissionsfreie Auslieferung an die Lieferadressen möglich ist.

Diese Aufgabe wird durch ein System mit den Merkmalen des unabhängigen Patentanspruchs 1 sowie ein Verfahren nach Anspruch 12 gelöst.

Vorteilhaft weist bei einem System zum Warentransport, insbesondere in städtischen Bereichen, mit Containern zur Aufnahme der Waren, insbesondere Pakete, sowie mindestens einer Unterverteilungsstelle, an der mindestens ein Container, bevorzugt eine Mehrzahl von Containern, zwischengelagert werden kann sowie mit mindestens einem Auslieferungsfahrzeug das einen Container transportieren kann,
wobei die Unterverteilungsstelle eine ebene Tischfläche aufweist, auf der die Container gelagert und verschoben werden können, die Tischfläche Wälzlagerungen auf, auf denen die Container aufliegen, insbesondere Lagerungskugeln oder Rollen, und die Auslieferungsfahrzeuge eine niveaugleiche Ladefläche zur Aufnahme eines Containers mit ebenfalls einer Wälzlagerung.

Ein solches "Rollentischsystem" ermöglicht ein einfaches und schnelles Handling und Verladen, da das Tischsystem leicht zugänglich und auf ergonomischer Arbeitshöhe angeordnet ist. Zudem ermöglicht ein rollenfreier Container eine flexiblere Bewegung auf der Tischfläche. Da die Container auf der ebenen Fläche bzw. Tischfläche und der Ladefläche sehr leicht bewegbar sind und keine Hubbewegung beim Aufnehmen eines Containers oder Absetzens erforderlich ist, kann auch das Höhenniveau so angepasst werden, dass bei entsprechenden Containermaßen der Einsatz in Parkhäusern und Tiefgaragen mit ihren Deckenhöhen möglich ist. Es ist auch denkbar, ungenutzte Ladenflächen als Standpunkt für die Unterverteilungsstelle zu nutzen. Eine solche Unterverteilungsstelle mit einer Tischfläche kann auch als Micro-Hub bezeichnet werden. Ein Micro-Hub ist ein bereits bekannter Begriff für ein zentral gelegenes Umschlags- bzw. Logistikzentrum im innerstädtischen Bereich. Die Besonderheit bei dem vorliegenden System ist ein Tischsystem bzw. eine Tischfläche, auf der die Wechselcontainer bzw. Container zwischengelagert werden können und die somit den Wechsel von Containern zwischen verschiedenen Transportfahrzeugen erlaubt. Das Tischsystem dient somit als stationäres Microdepot und ermöglicht die Transportbündelung durch Container auf dem Weg von suburbanen in urbane Gebiete sowie den Einsatz von umweltfreundlichen Transportmitteln auf der letzten Meile.

Die Auslieferungsfahrzeuge können Rollen aufweisen, die eine Verschiebbarkeit eines Containers in Fahrzeuglängsrichtung ermöglichen.

Die relativ kompakten und damit auch wendigen Auslieferungsfahrzeuge können auch unter engen Platzverhältnissen relativ gut mit ihrer Fahrzeugrückseite an die Tischfläche heranfahren. Wesentlich ist dann eine Verschiebbarkeit der Container in Fahrzeuglängsrichtung. Dies gilt insbesondere bei der Nutzung von Parkhaus- oder Tiefgaragenparkplätzen als Stellplatz für eine Unterverteilungsstelle, bei denen ein seitliches Heranfahren den Nachbarstellplatz erfordern würde. Durch die definierte Bewegung in einer Richtung wird auch verhindert, dass die Container ungewollt zu einer Seite sich bewegen. Die Richtung der Verschiebbarkeit des Containers kann dabei durch die Drehachse der Rollen festgelegt werden.

In einer vorteilhaften Ausgestaltung ist das Auslieferungsfahrzeug ein Lastenrad, ein Lastenfahrrad, ein Lastenpedelec oder ein Elektrokleinfahrzeug, wobei das Elektrokleinfahrzeug ein autonom fahrendes sein kann oder eines, bei dem neben dem einen Container nur ein Fahrerplatz für eine Person vorhanden ist mit entsprechend kleinen Außenabmessungen.

Ein Lastenrad beispielsweise in Form eines elektrisch unterstützten CargoBike weist im innerstädtischen Bereich verschiedene Vorteile gegenüber einem Standard-Logistikfahrzeug, wie bspw. einem Van, auf. Zu den Problemen, welche gelöst werden müssen, gehören erhöhtes Verkehrsaufkommen, Emissionen wie Stickoxide, Feinstaub und Lärm, ungenügende Parkflächen sowie unzureichende Verfügbarkeit von Personal mit Führerschein für entsprechende Lieferwägen. Um diese Herausforderungen zu lösen, setzt das System auf den Einsatz der genannten Auslieferungsfahrzeuge zur Paketzustellung bzw. Auslieferung zum Endkunden. Diese Fahrzeuge sind bereits in Vielzahl am Markt verfügbar, werden jedoch zumeist ganz ohne bzw. nur mit fest installierten Transportboxen betrieben. Vorteil des Wechselcontainer-Konzepts ist durch die Vorkommissionierung ein schnelleres Beladen des Auslieferungsfahrzeug und somit eine niedrigere Standzeit bzw. mehr mögliche Transportrouten. Um die Aufnahme, Sicherung sowie das Be- und Entladen eines Containers bei dem Auslieferungsfahrzeug bzw. CargoBike zu ermöglichen, kann ein Zwischenrahmen für solche Auslieferungsfahrzeug vorgesehen werden, mit dem von einer bestehenden Aufnahmefläche beispielsweise für eine Transportbox, ein gleiches Niveau wie die Tischfläche der Unterverteilungsstelle erreicht werden kann.

Das Auslieferungsfahrzeug kann vorteilhaft ein Schienenfahrzeug, insbesondere eine Straßenbahn sein.

Weiterhin kann das Auslieferungsfahrzeug Rollen aufweisen, die eine Verschiebbarkeit eines Containers in Fahrzeugquerrichtung ermöglichen.

Vorteilhaft weist die Unterverteilungsstelle eine Länge und Breite von maximal der Länge und Breite eines Pkw-Stellplatzes nach der Musterverordnung über den Bau und Betrieb von Garagen auf, insbesondere 5 m Länge und 2,30 m Breite.

Dadurch kann die Unterverteilungsstelle auf einem Parkplatz im Freien, aber insbesondere auch in Parkhäusern oder Tiefgaragen positioniert und abgestellt werden. Durch die angepassten Ausmaße ist hierfür die Verwendung eines normalen Pkw-Stellplatzes möglich. Insbesondere Parkhäuser und Tiefgaragen befinden sich aber oftmals in Innenstädten an sehr zentralen Positionen und ermöglichen somit eine Auslieferung über kurze Wege. Weiterhin steht diese Infrastruktur auch kostengünstig zur Verfügung und bieten vor allem Parkhäuser und Tiefgaragen ausreichend Platzreserven, um solche Unterverteilungsstellen aufzunehmen.

In einer vorteilhaften Ausgestaltung sind die Anlieferungsfahrzeuge mit einer niveaugleichen Ladefläche zu der Tischfläche ebenfalls mit Wälzlagerungen für die Container versehen und können eine Mehrzahl von Containern transportieren, um die Unterverteilungsstelle mit Containern zu beliefern.

Die Anlieferungsfahrzeuge können Kleinlaster mit einer Pritsche sein.

Vorteilhaft ist das Anlieferungsfahrzeug ein Kleinlaster, auf dessen Fahrzeugrahmen ein Zwischenrahmen zur Positionierung der Ladefläche auf niveaugleicher Höhe zu der Tischfläche der Unterverteilungsstelle angeordnet ist.

Die Unterverteilungsstellen oder Hubs werden mittels Logistikfahrzeugen bzw. den Anlieferungsfahrzeuge beliefert, welche ein größeres Ladevolumen und eine höhere Reichweite im Vergleich zu den Anlieferungsfahrzeugen aufweisen.

Dieses Logistiksystem besteht somit aus folgenden Subsystemen:
- Wechselcontainer; Dieser Container dient als Transport- und Aufbewahrungsbox für die zu liefernden Güter und kann durch unterschiedliche, entsprechend ausgerüstete Fahrzeuge transportiert und in den Hubs bzw. Unterverteilungsstellen gelagert bzw. umgeschlagen werden. Um einen möglichst effizienten Ablauf der Logistikkette zu gewährleisten, sollten diese Container in größeren, suburbanen Logistikzentren vorkommissioniert und an den Unterverteilungsstellen nur noch umgeschlagen werden.

Weiterer Vorteil dieser Vorkommissionierung ist, dass die Container an den Unterverteilungsstellen nicht mehr geöffnet und mit Paketen Be-/Entladen werden. Einerseits vereinfacht dies den Ablauf an den Unterverteilungsstellen, andererseits ermöglicht dies erst den Einsatz in Parkhäusern, da aus Brandschutzgründen das Beund Entladen der Container hier problematisch ist. Unter Berücksichtigung der limitierenden Anforderungen aus dem Einsatz in Innenstädten und dem Transport mit Anlieferungsfahrzeugen wie Lasträdern soll der Container ein möglichst großes Ladevolumen aufweisen und sich in bestehende Logistikketten integrieren lassen. Zudem soll der Container an die Anforderungen aus der Paketzustellung hinsichtlich Haltbarkeit, Ergonomie und Resistenz gegen Umwelteinflüsse angepasst sein.

In einer vorteilhaften Ausgestaltung ist das Anlieferungsfahrzeug ein Schienenfahrzeug, insbesondere eine Straßenbahn.

Schienenfahrzeuge als Nahverkehrsmittel erfüllen die Anforderungen an Anlieferungsfahrzeuge ebenso. Diese Fahrzeuge verfügen über sehr große Ladekapazität. Zudem können diese Fahrzeuge Schienen- und Tunnelnetze im innerstädtischen Bereich nutzen, was durch straßengebundene Fahrzeuge nicht möglich ist. Somit können einerseits andere Gebiete oder Bereiche im Stadtbereich besser erreicht werden und andererseits zu Stoßzeiten Stauzonen im Straßenverkehr umfahren werden. Umgesetzt werden kann der Containertransport beispielsweise mit Straßenbahnen (Tram), S-Bahnen oder Untergrundbahnen (Metro) als Schienenfahrzeuge. Die Ladung kann entweder in speziell dafür angefertigten und unabhängig vom Personennahverkehr eingesetzten Zügen transportiert werden oder es werden separate Cargo-Wagons in bestehende Züge eingefügt bzw. Personen-Wagons bei wenig Auslastung ersetzt. Alternativ können separate Wagons oder Beiwagen als Anhänger hinter dem Zug angehängt werden. Als Unterverteilungsstellen können einerseits Stationen an normalen Haltestellen dienen, oder neue separat für den Warenumschlag geschaffene Haltestellen verwendet werden.

Weiterhin können die Container nicht nur mit herkömmlichen Zügen, sondern auch mit innovativen Transportkapseln in Tunneltransportsystemen transportiert werden, Vorteil ist hierbei, dass diese Systeme oft bereits auf Ladung mit Europaletten-Grundmaß abgestimmt sind.

Das Anlieferungsfahrzeug kann Rollen aufweisen, die eine Verschiebbarkeit eines Containers in Fahrzeugquerrichtung ermöglichen.

Vorteilhaft und optional können die Schienenfahrzeuge Rollen zum Manövrieren und Verladen der Container auf ihren Ladeflächen teilweise oder insgesamt einsetzen. welche niveaugleich mit den Wälzlagerungen auf der Tischfläche der Unterverteilungsstelle abgestimmt ist. Die Richtung der Verschiebbarkeit der Container wird dabei beispielsweise durch die Orientierung der Drehachsen von Rollen festgelegt.

Vorteilhaft ist die Unterverteilungsstelle ein aus der Tischfläche und Beinen gebildeter Tisch, der durch ein unterfahrendes Fahrzeug, insbesondere auch ein Anlieferungsfahrzeug nach Anheben der Tischfläche, aufgenommen und transportiert werden kann.

Dies ermöglicht einen leichten und schnellen Aufbau einer solchen Unterverteilungsstelle, insbesondere in einem Parkhaus oder in einer Tiefgarage ebenso ist ein schneller Abbau oder ein Versetzen möglich.

Auf einem Auslieferungsfahrzeug mit tiefer, insbesondere bodennahen Radaufnahme kann ein Zwischenrahmen zur Positionierung der Ladefläche auf niveaugleicher Höhe zu der Tischfläche der Unterverteilungsstelle angeordnet sein.

Die Aufgabe wird auch gelöst durch ein Verfahren zum Warentransport, insbesondere in städtischen Bereichen, unter Verwendung eines Systems wie zuvor beschrieben, wobei in einem ersten Schritt Waren und/oder Pakete für einen Auslieferungsbereich zusammengestellt und in einem Container verstaut werden, in einem zweiten Schritt der Container mit dem Anlieferungsfahrzeug zu der Unterverteilungsstelle transportiert und dort gelagert wird und in einem dritten Schritt der Container ohne diesen zu öffnen auf das Auslieferungsfahrzeug umgesetzt wird um mit dem Auslieferungsfahrzeug die Waren und/oder Pakete in dem Auslieferungsbereich auszuliefern.

Modularität bzw. Skalierbarkeit der Hub-Größe bzw. Größe der Unterverteilungsstelle ist eine relevante Funktion, da hierdurch eine ideale Raumausnutzung bei angepasstem Umschlagsvolumen auf den begrenzten Flächen in Innenstädten ermöglicht wird. Möglichst einfaches Handling der Container auf dem Tischsystem bzw. der Tischfläche führt zu schnellem Containerwechsel und dadurch maximierter Effizienz des Gesamtsystems. Sicheres Verladen der Container zwischen Tisch und Logistikfahrzeug ist dabei von höchster Relevanz. Um diese Micro-Hubs unabhängig von den Gegebenheiten an möglichen Standorten zu machen, ist der Bedarf von Elektrizität für die Funktionalität des Systems zu vermeiden.

An die Anlieferungsfahrzeuge zur Belieferung der Unterverteilungsstellen ergeben sich unterschiedliche Anforderungen. Einerseits muss zur wirtschaftlichen Nutzung eine möglichst große Ladekapazität abgebildet werden, andererseits ist ein kompaktes Fahrzeug im innerstädtischen Bereich von Vorteil. Zum Einfahren in Parkhäuser oder Tiefgaragen muss das Anlieferungsfahrzeug sehr kompakte Außenabmessungen aufweisen. Zudem ist eine möglichst niedrige Ladekante von Vorteil, da hierdurch, trotz limitierender Einfahrtshöhe in Parkhäusern, Container mit großer Höhe und somit großem Ladevolumen transportiert werden können. Als Kompromiss aus diesen Anforderungen ergibt sich ein Pick-Up-Artiges Fahrzeug. Am Mark verfügbare Fahrzeuge dieser Kategorie müssen zum Transport, zur Sicherung sowie zum Be- und Entladen von Logistikcontainern ebenso mit einem Zwischenrahmen ausgestattet werden. Dieser Zwischenrahmen muss im Vergleich zum CargoBike bzw. Auslieferungsfahrzeug jedoch mehr Container fassen und höheren Belastungen durch größere Fahrgeschwindigkeiten standhalten. Ebenso sollte, aufgrund der bereits genannten Problematiken in Innenstädten, darauf geachtet werden, dass emissionsfreie Fahrzeuge in dieser Pick-Up-Kategorie verfügbar sind. In weiteren Schritten kann auch durch die Kategorie der autonomen Fahrzeuge eine Lieferkette vom suburbanen Logistikzentrum bis zum Endkunden umgesetzt werden, bei der der Einsatz von Personal mit Führerschein für entsprechende Lieferfahrzeuge nicht mehr nötig ist, da die Fahrzeuge Führerschein frei bewegt werden können wie beispielsweise Lastenfahrräder oder Pedelecs oder weil beispielsweise die Anlieferungsfahrzeuge autonom fahren.

Weitere Vorteile und Einzelheiten der Erfindung werden anhand der in den schematischen Figuren dargestellten Ausführungsbeispiele näher erläutert. Hierbei zeigt
- Fig. 1: schematisch das erfindungsgemäße Verfahren,
- Fig. 2: eine symbolische Darstellung der Komponenten des Systems,
- Fig. 3: ein Anlieferungsfahrzeug,
- Fig. 4: eine Unterverteilungsstelle mit einem Auslieferungsfahrzeug beim Umladen und
- Fig. 5: ein Schienenfahrzeug 19 ausgeführt als Straßenbahn 20 als Anlieferungsfahrzeug 4.

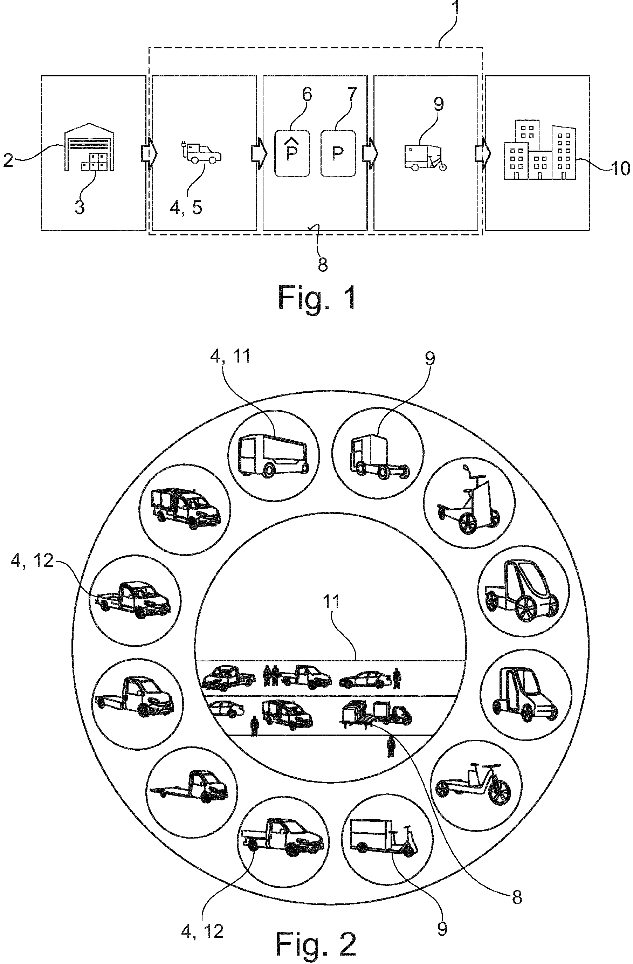

Die Fig. 1 zeigt schematisch das erfindungsgemäße Verfahren mit seinem Kernbereich 1, der durch das gestrichelte Rechteck gekennzeichnet ist. Von einem Logistikcenter 2 werden die Container 3 durch ein Anlieferungsfahrzeug 4, beispielsweise ein Elektrofahrzeug 5, zu einem Parkhaus 6 oder einem Parkplatz 7 transportiert. In dem Parkhaus 6 oder auf dem Parkplatz 7 ist eine Unterverteilungsstelle 8 angeordnet. Von dort werden die Container 3, ohne dass diese geöffnet werden müssen, durch Auslieferungsfahrzeuge 9 im Nahbereich zu den Empfängern 10 transportiert, wie durch die Pfeile verdeutlicht.

Die Fig. 2 zeigt eine symbolische Darstellung der Komponenten des Systems, wobei auf dem linken Halbkreis Anlieferungsfahrzeuge 4 und auf dem rechten Halbkreis Auslieferungsfahrzeug 9 dargestellt sind. Wie in der Mitte verdeutlicht, kann eine Unterverteilungsstelle 8 in einer Tiefgarage 11 angeordnet sein. Ein mögliches Auslieferungsfahrzeug 9 können dabei vollständig autonome Fahrzeuge 11 sein, aber auch entsprechend umgestaltete Pick-ups 12. Auslieferungsfahrzeug 9 können alle möglichen Formen von Lastenfahrrädern, pedalbetriebenen Fahrzeugen bis hin zu kleinen Elektrofahrzeugen umfassen.

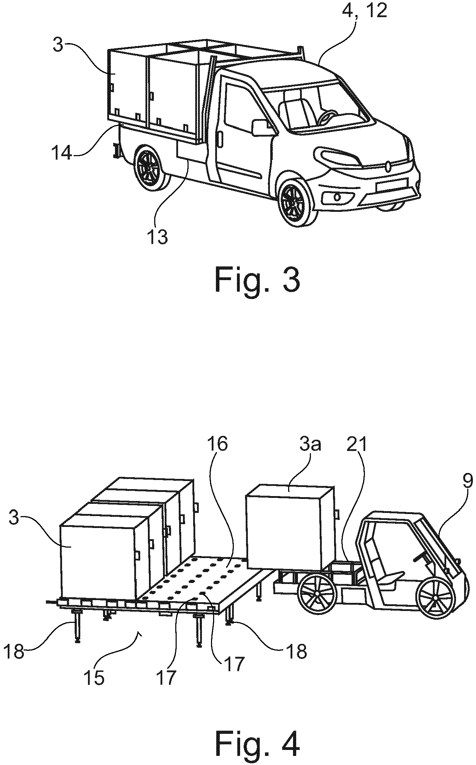

Die Fig. 3 zeigt ein Anlieferungsfahrzeug 4 in Form eines Pick-ups 12, der mit einer Rahmenerhöhung 13 versehen wurde. Eine Ladefläche 14 befindet sich daher auf einem Niveau wie bei der Unterverteilungsstelle. Auf der Ladefläche 14 sind die Container 3 für den Transport angeordnet.

Die Fig. 4 zeigt eine Unterverteilungsstelle 15 mit einer Tischfläche 16, die Rollen 17 aufweist. Die Tischfläche 16 ist auf Tischbeinen 18 angeordnet. Auf der Tischfläche 16 sind Container 3 gelagert. Ein Auslieferungsfahrzeug 9 ist mit seiner Rückseite an die Tischfläche 16 herangefahren und lädt gerade einen Container 3a um. Dabei weist das Auslieferungsfahrzeug 9 als kleines Elektrofahrzeug einen Zwischenrahmen 21 auf, mit dem das gleiche Niveau wie die Tischfläche 16 erreicht wird und ein niveaugleiches Umladen durch Verschieben des Containers 3a ermöglicht wird. Die Unterverteilungsstelle 15 kann dabei Maße aufweisen, sodass diese auf einen oder mehrere Stellplätze eines Parkplatzes bzw. Parkhauses oder einer Tiefgarage passt.

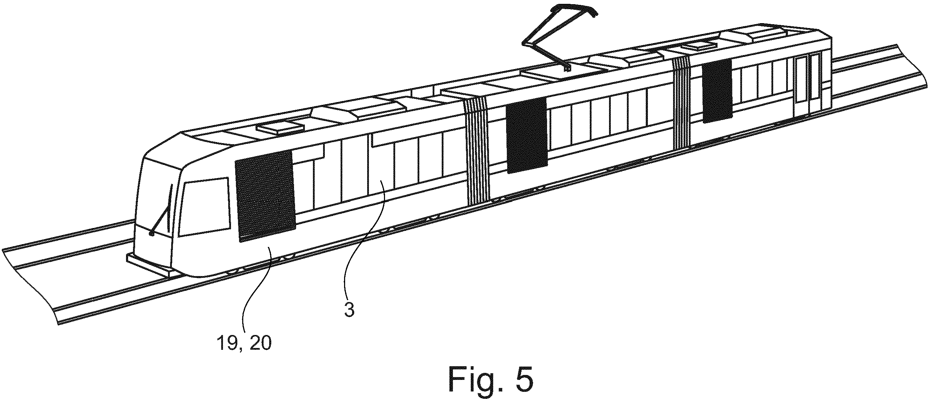

Die Fig. 5 zeigt ein Schienenfahrzeug 19 in Form einer Straßenbahn 20 in einer speziellen Ausführungsform zum Transport der Container 3. Alternativ kann auch ein Anhänger an einer Straßenbahn oder einer Werkstattlok eingesetzt werden. Vorteilhaft können über Schienenfahrzeuge sehr zentrale Punkte in den Städten erreicht werden. Neben oder an den Haltestellen bzw. extra eingerichteten Haltepunkten können dann Unterverteilungsstellen 15 vorgesehen werden, die direkt neben den Schienen angeordnet werden, sodass auch hier ein niveaugleiches Umladen durch Verschieben der Container 3 möglich ist.

## Patentansprüche

1. System zum Warentransport, insbesondere in städtischen Bereichen, mit Containern (3) zur Aufnahme der Waren, insbesondere Pakete, sowie mindestens einer Unterverteilungsstelle (8), an der mindestens ein Container (3), bevorzugt eine Mehrzahl von Containern (3), zwischengelagert werden kann sowie mit mindestens einem Auslieferungsfahrzeug (9) das einen Container transportieren kann,
wobei die Unterverteilungsstelle (8) eine ebene Tischfläche (16) aufweist, auf der die Container (3) gelagert und verschoben werden können,
**dadurch gekennzeichnet,**
**dass** die Tischfläche (16) Wälzlagerungen (17) aufweist, auf denen die Container (3) aufliegen, insbesondere Lagerungskugeln oder Rollen, und die Auslieferungsfahrzeuge (9) eine niveaugleiche Ladefläche zur Aufnahme eines Containers (3) mit ebenfalls einer Wälzlagerung.

2. System Anspruch 1,
**dadurch gekennzeichnet,**
**dass** die Auslieferungsfahrzeuge (8) Rollen aufweisen, die eine Verschiebbarkeit eines Containers (3) in Fahrzeuglängsrichtung ermöglichen.

3. System nach Anspruch 1 oder 2,
**dadurch gekennzeichnet,**
**dass** das Auslieferungsfahrzeug (8) ein Lastenrad, ein Lastenfahrrad, ein Lastenpedelec oder ein Elektrokleinfahrzeug ist, wobei das Elektrokleinfahrzeug ein autonom fahrendes sein kann oder eines, bei dem neben dem einem Container (3) nur ein Fahrerplatz für eine Person vorhanden ist mit entsprechend kleinen Außenabmessungen.

4. System nach einem der vorhergehenden Ansprüche,
**dadurch gekennzeichnet,**
**dass** die Unterverteilungsstelle (8) eine Länge und Breite von maximal der Länge und Breite eines Pkw-Stellplatzes nach der Musterverordnung über den Bau und Betrieb von Garagen aufweist, insbesondere 5 m Länge und 2,30 m Breite.

5. System nach einem der vorhergehenden Ansprüche,
**dadurch gekennzeichnet,**
**dass** Anlieferungsfahrzeuge (4) mit einer niveaugleichen Ladefläche (14) zu der Tischfläche (16) ebenfalls mit Wälzlagerungen für die Container (3) versehen sind und eine Mehrzahl von Containern (3) transportieren können, um die Unterverteilungsstelle (8) mit Containern (3) zu beliefern.

6. System nach Anspruch 5,
**dadurch gekennzeichnet,**
**dass** die Anlieferungsfahrzeuge (4) Kleinlaster mit einer Pritsche sind.

7. System nach Anspruch 5 oder 6,
**dadurch gekennzeichnet,**
**dass** das Anlieferungsfahrzeug (4) ein Kleinlaster ist, auf dessen Fahrzeugrahmen ein Zwischenrahmen (13) zur Positionierung der Ladefläche (14) auf niveaugleicher Höhe zu der Tischfläche (16) der Unterverteilungsstelle (8) angeordnet ist.

8. System nach einem Ansprüche 1 bis 5,
**dadurch gekennzeichnet,**
**dass** das Anlieferungsfahrzeug (4) ein Schienenfahrzeug (19), insbesondere eine Straßenbahn (20) ist.

9. System nach Anspruch 8,
**dadurch gekennzeichnet,**
**dass** das Anlieferungsfahrzeug (4) Rollen aufweisen, die eine Verschiebbarkeit eines Containers (3) in Fahrzeugquerrichtung ermöglichen.

10. System nach einem der vorhergehenden Ansprüche,
**dadurch gekennzeichnet,**
**dass** die Unterverteilungsstelle (8) ein aus der Tischfläche (16) und Beinen (18) gebildeter Tisch ist, der durch ein unterfahrendes Fahrzeug, insbesondere auch ein Anlieferungsfahrzeug nach Anheben der Tischfläche (16), aufgenommen und transportiert werden kann.

11. System nach einem der vorhergehenden Ansprüche,
**dadurch gekennzeichnet,**
**dass** auf einem Auslieferungsfahrzeug (9) mit tiefer, insbesondere bodennahen Radaufnahme ein Zwischenrahmen (21) zur Positionierung der Ladefläche auf niveaugleicher Höhe zu der Tischfläche (16) der Unterverteilungsstelle (8) angeordnet ist.

12. Verfahren zum Warentransport, insbesondere in städtischen Bereichen, unter Verwendung eines Systems nach einem der vorhergehenden Ansprüche, wobei in einem
ersten Schritt Waren und/oder Pakete für einen Auslieferungsbereich zusammengestellt und in einem Container (3) verstaut werden, in einem zweiten Schritt der Container (3) mit dem Anlieferungsfahrzeug (4) zu der Unterverteilungsstelle (8) transportiert und dort gelagert wird und in einem dritten Schritt der Container (3) ohne diesen zu öffnen auf das Auslieferungsfahrzeug (9) umgesetzt wird um mit dem Auslieferungsfahrzeug (9) die Waren und/oder Pakete in dem Auslieferungsbereich auszuliefern.
